# EUROPEAN PATENT SPECIFICATION

(11) **EP 3 135 149 B1**
(45) Date of publication and mention of the grant of the patent: **05.06.2019**
(21) Application number: 16186032.5
(22) Date of filing: 26.08.2016
(51) Int. Cl.: A45B 25/14

(54) **SUNSHADE AND SUN SHADING SYSTEM**
SONNENBLENDE UND BESCHATTUNGSSYSTEM
PARE-SOL ET SYSTÈME DE PARE-SOL

(30) Priority: 28.08.2015 CN 201520661987 U
(43) Date of publication of application: 01.03.2017
(73) Proprietor: Yotrio Group Co., Ltd., Linhai City Zhejiang 317004 (CN)
(72) Inventor: XIE, Jianping, 317004 Linhai Zhejiang (CN)
(74) Representative: Schulz Junghans Patentanwälte PartGmbB

(56) References cited:
- EP-A2- 1 038 464
- US-A1- 2004 184 261
- US-A1- 2006 266 398
- US-A1- 2012 325 278
- US-A1- 2015 216 273

## Description

The present invention relates to a mechanical field, particularly to a sunshade and a sun shading system.

Sunshades are used in sites like beaches, villas, swimming pools or cafes. However, functionality of current sunshades used outdoors generally serve only one purpose. The sunshades mainly shield the sun and do not have additional functions. Furthermore, as the area of current sunshade surfaces is large and the support columns are high, it is very laborious to open and close the sunshade manually. Although the Chinese utility model CN2482841Y discloses a sunshade that can be opened electrically via a mechanical structure, the described sunshade must be opened with a power source to be externally connected. Therefore, in many cases, the described solution is inconvenient in use. Meanwhile, as people depend more and more on digital technology, more people and events are developed based on Internet and electronic science and technology. Electrical energy and electronics are already closely related to people's lives, and a sunshade having single sun-shielding functionality cannot suffice to meet needs of people's present-day leisure life.

Document US2012/0325278 and US2015/0216273 disclose sunshades having solar modules.

The problems to be solved by the present invention are difficult and inconvenient opening and closing and the lack of functionality.

The problem is solved by subject matter of the sunshade as claimed in claim 1 and by the sun shading system as claimed in claim 13. Specific embodiments of the sunshade are described in claims 2-12.

The first aspect of the invention is a sunshade according to claim 1. The electric storage device may be a battery.

During use as intended, the upper surface of the sunshade cloth is the surface facing upwards. Typically, a plurality of solar modules is arranged on the upper surface of the sunshade cloth. The number of solar modules may depend on energy consumption needs of specific functions in use. The present invention does not limit the types and number of the solar module.

The solar module is suitable to convert light energy to electrical energy. The electrical energy may be used to drive an electrical driving mechanism to complete the opening and closing motion of the sunshade frame so as to implement opening and closing of the sunshade without the use of an external power source or manual force. Different types of driving mechanisms are possible, but typically, an electric motor is used. Particularly, the opening and closing motion of the sunshade is realized with a mechanical opening/closing mechanism which will be described in detail later.

This is a great advantage, as difficult manual opening and closing is not necessary anymore and no external power source is needed. As sunshades are usually used in direct sunlight, the energy provided by the solar module is sufficient to easily charge the electric storage device, if the said components are chosen and designed correctly.

In one embodiment of the invention, the sunshade comprises a control device which is particularly arranged on the sunshade frame. The control device comprises a control chip and at least one input unit. The control chip is electrically connectable or connected to the electric storage device and the input unit is electrically connectable or connected to the control chip. The input unit is adapted to control the electrical driving mechanism. Electrical connections are typically established in the ready to use sunshade, but, however, for transportation and/or packaging purposes they may be disconnected. Therefore, in the following, all electrical connections are referred to as "connectable or connected".

The control device is particularly an electric or electronic control device. The input unit is a unit for manually inputting control commands. Particularly, it comprises at least one control switch or button or the like. Control of the electrical driving mechanism is particularly suitable to achieve opening and closing of the sunshade.

The input unit may be arranged on the sunshade frame. It may alternatively be a remote control device which is coupled with the electrical driving mechanism wirelessly or via wire. The control device comprising the input unit facilitates control of the opening and closing and therefore adds functionality and convenience.

In one embodiment, the control device comprises a USB interface which is electrically connectable or connected to the electric storage device and, particularly, to the control chip.

The USB interface is adapted to connect any kind of mobile devices for charging purposes and/or for data transmission. It may be a USB socket and it may comprise a cable with a suitable plug. It may alternatively be realized as fixed cable with a suitable plug.

The USB interface is used to provide a stable wired charging current for electronic products, which increases functionality of the sunshade when being used outdoors, and further meets needs of people's leisure life.

In another embodiment, the control device comprises a transceiving device suitable to receive Internet data and provide Wi-Fi signals, which is coupled to the control chip for data transmission.

The transceiving device suitable to receive Internet data and provide Wi-Fi signals may receive Internet data via cable, such as a network cable. In this case, the device may comprise a network cable interface and/or a network cable. It may alternatively be adapted to receive wireless data of which it may be suitable to amplify the signal strength. Besides, it can comprise a phone card and/ or SIM card insertion slot for receiving wireless data. A coupling for data transmission may include any kind of data, for example an on/off command, control data or content data. One or both of the network cable interface and the insertion slot may be arranged.

The transceiving device suitable to receive Internet data and provide Wi-Fi signals may be referred to as wireless transceiving device or wireless transceiving module. It may enable wireless routing and is directly or indirectly connectable or connected to the control chip.

A control procedure of the wireless transceiving device may be as follows: the wireless transceiving device receives an electrical signal directed from the network cable interface or phone card insertion slot and transmits it in a wireless manner after being processed by the control chip. The signal may be amplified. By adding Internet functionality to the sunshade, needs of people's leisure life are further satisfied. In outdoor situations where sunshades are usually used, this can constitute a strong increase in convenience.

In further embodiment, the control device comprises a detection module and a display screen. The detection module is connectable or connected to the electric storage device and the control chip, respectively, to detect the charging level of the electric storage device. The display screen is electrically connectable or connected to the detection module to display the charging level in the electric storage device.

Besides the charging level, more information may be detected, such as storage device health status, type of storage device. The control chip may furthermore be adapted to compute additional information such as time until storage device is fully charged, remaining usage time, and more. The display screen may be any device suitable to display the desired information. For example, a LED display or segment display is possible. Alternatively, a flat screen, e.g. based on organic light emitting diodes technology, OLED, a liquid crystal display, LCD, a plasma display or any other display may be used.

A specific procedure for controlling the detection module may be as follows: the detection module detects the electrical charging status of the electric storage device and compares it with a preset value of the control chip so as to display the electrical power quantity of the electric storage device on the display screen in the form of percentage. If the electric storage device is not fully charged, the control chip enables the electric storage device to communicate with the solar module so that the power generation function of the solar module charges the electric storage device. As soon as the electric storage device detects a fully-charged state, the control chip automatically turns off the charging circuit.

Some or all electronic components may be realized in a modular manner. Additional electronic functions may be arranged in order to meet consumers' different needs. For example, electronic function components such as Bluetooth and sound equipment may be added to further enrich functionality of sunshade products. The modularized design can help improve the flexibility of production. For example, the USB interface may be optional in a specific model of sunshade products. The present invention does not limit the types and number of electronic function modules included in the control device of a specifically produced sunshade.

Since the electric storage device is provided to collect electrical energy converted from solar energy, further devices having different electrical or electronical functions may be additionally provided according to consumers' different demands so as to substantially enrich the functions of the sunshade in use.

According to the invention, the sunshade frame comprises an external upright column, an internal upright column, an upper suspension head, a lower suspension head, a slide, an upper strut, a middle strut and a lower strut. The upper suspension head is arranged on a top end of the internal upright column, the lower suspension head is arranged on a top end of the external upright column and the external upright column is a hollow tubular structure. The internal upright column passes through the lower suspension head and is slidably connected in an inner cavity of the external upright column. The internal upright column is connected to the electrical driving mechanism arranged in a pipe cavity of the external upright column and the slide is slidably connected on the external upright column. A top end of the upper strut is hinged on the upper suspension head and a bottom end of the upper strut is suspended. A top end of the lower strut is hinged on a middle portion of the upper strut and a bottom end of the lower strut is hinged on the slide. A top end of the middle strut is hinged on the lower suspension head and a bottom end of the middle strut is hinged on a middle portion of the lower strut. The sunshade cloth is retained by the upper strut.

Particularly, a bottom end of the internal upright column is connected to the electrical driving mechanism. The described columns with the tubular structures are not necessarily of a circular cross section. Particularly, their cross sections are geometrically similar, but of different diameters, and the internal upright column is slidable in the external upright column. The bottom end of the internal upright column is particularly mechanically connected to the electrical driving mechanism, so it is moveable in a horizontal direction, which in other words is along the longitudinal axis of the external upright column, driven by the electrical driving mechanism. The suspension heads are principally arranged on top of the respective upright columns. However, there may be parts of the respective columns protruding over the respective suspension heads.

The top end of the lower strut which is hinged on the middle portion of the upper strut is not necessarily hinged in the geometrical middle of the upper strut. It is moreover hinged in a suitable position between the top end and the bottom end of the upper strut. The same applies for the bottom end of the middle strut which is hinged on a middle portion of the lower strut.

Particularly, a plurality of lower, middle and upper struts is arranged in equal angles around the concentrical columns and hinged as described. In one embodiment, between six and twelve of each type of struts is used. In a certain embodiment, eight of upper and lower struts are used. Particularly, each upper strut is connected to a lower strut. The number of middle struts, however, is not necessarily equal to the number of upper and lower struts. For example, it is possible that only every second lower strut is connected to a respective middle strut. In a certain embodiment, four middle struts are used.

The described columns, struts, suspension heads and the slide form a mechanical opening mechanism that works as follows: A rise of the upper suspension head, realized by the electrical driving mechanism, leads to a rise of the slide. When the slide rises, the bottom ends of the middle struts rise and the top ends of the lower struts expand outward, since the lower suspension head remains stationary. The expanding top ends of the lower struts lead to expanding upper struts and achieve electrical opening of the sunshade. The closing of the sunshade may be implemented by executing a procedure reverse to the described opening procedure.

The electrical driving mechanism is arranged in the external upright column, thereby providing a pleasant appearance and a stable performance and meanwhile avoiding damage to the electrical driving mechanism due to wind and/or rain.

In another embodiment, the electrical driving mechanism comprises a motor and a screw, wherein the motor is electrically connected to the electric storage device, the screw is mechanically connected to a motor shaft of the motor, and the internal upright column is connected to the screw, particularly with its bottom end. The screw is particularly realized as threaded rod. This is a simple and inexpensive way to realize a safe and functional drive.

In another embodiment of the present invention, the electrical driving mechanism comprises a motor, a traction wheel and a traction cord. The motor is electrically connectable or connected to the electric storage device and the traction wheel is mounted on the motor shaft of the motor. One end of the traction cord is fixed on the traction wheel and the internal upright column is connected to the other end of the traction cord, particularly with its bottom end. As such, the traction cord is driven by the motor to achieve upwards and downwards movement of the internal upright column to control the opening and closing of the sunshade. Even though in principle, the ends of a cord are connected to the traction wheel and the internal upright, respectively, there may be parts of the cord protruding from the respective fixing point.

In one embodiment, the sunshade comprises a plurality of spray nozzles, wherein the spray nozzles are distributed on at least one of the external upright column, the upper suspension head, the lower suspension head, the slide and the upper strut. Each spray nozzle is electrically connected to the control chip.

Particularly, in this embodiment, the control device, comprising the control chip, further comprises at least one input unit, wherein the control chip is electrically connected to the electric storage device, the input unit is electrically connected to the control chip, and the spray nozzles are controllable via the input unit. Particularly, the input unit is suitable to transmit control commands to switch the spray nozzles on and off, but for example also spraying intensity, spraying angles and/or other parameters may be adjustable and/or controllable.

Said spray nozzles are particularly suitable to convert water into mist to create a touch of coolness in a high-temperature environment and function to lower temperature. Water for spraying may be provided by a peripheral device, or a water pipe is provided in the external upright column or the upper suspension head to feed water. Particularly, each spray nozzle is connected to a water tube. At least one input unit of the control device may be provided for switching the spray nozzles on and off.

In another embodiment, the sunshade comprises a plurality of light emitting members which are arranged on one or more of the upper strut, the middle strut and the lower strut. Each of the light emitting members is electrically connectable or connected to the electric storage device. This connection is also possible in an indirect manner; e.g. with a series connection of light members. The light emitting members may comprise LEDs. The light emitting members may be realized as LED strip, i.e. an illuminating strip comprising LEDs. They may further be comprised in a LED belt arranged axially along the upper and/or middle and/or lower strut and/or close to a wall surface of the upper, middle and/or lower strut. Alternatively, the light emitting members can be realized as bulbs connected to an upper strut or middle strut or lower strut. The present invention does not limit the types of the light emitting members.

In one embodiment, the upper strut, the middle strut and the lower strut are at least partially hollow tubular structures forming cavities and the light emitting members are realized as LED strips. The LED strips are at least partially arranged in the cavities of the upper strut, the middle strut and/or the lower strut. Particularly, the light emitting members are comprised in said LED strip or LED strips, which are particularly entirely arranged in said cavities. The LED strip or LED strips may be made of a rigid material to facilitate insertion in the strut. This enables quick and convenient manufacturing. The light emitting members can create atmospheric lighting and provide illumination for consumers at night.

In another embodiment, the sunshade cloth comprises an inner sunshade cloth and a roof cloth. The roof cloth is positioned on top of the sunshade and covers an upper portion of the inner sunshade cloth. Through holes are provided between the roof cloth and the inner sunshade cloth for the purpose of light and air permeability. A fixing element may be arranged above the roof cloth, particularly centrally.

Particularly, the roof cloth is aligned centrally. It can be provided for design purposes. Furthermore, it may act as a separately producible carrier of one or more solar modules.

In a further embodiment, the solar module is positioned on an upper surface of the inner sunshade cloth and/or an upper surface of the roof cloth. Depending on the amount of electricity needed, the number and size of the solar modules may be selected. Large solar modules may be positioned on the inner sunshade cloth while smaller solar modules may be positioned on the roof cloth.

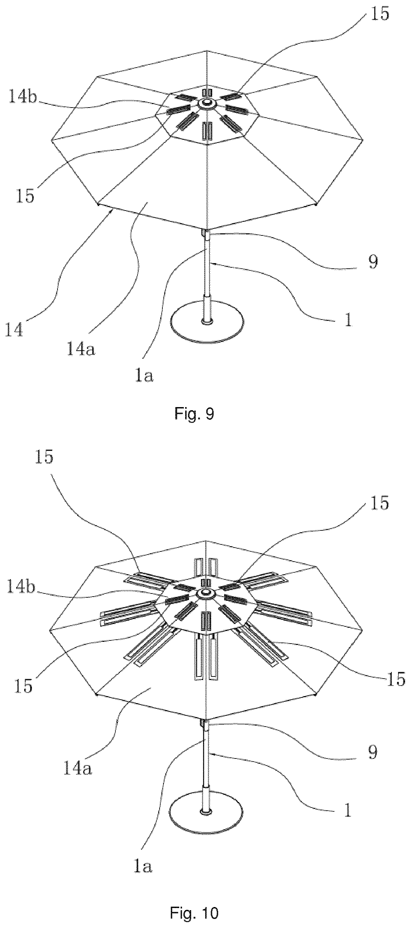

At this time, the solar module may be only positioned on an upper surface of the roof cloth, as shown in Fig. 9, and may also be positioned on both the upper surface of the inner sunshade cloth and the upper surface of the roof cloth, as shown in Fig. 10. The present invention does not limit the positions of the solar modules.

In an embodiment of the invention, the solar module may be made of monocrystalline silicon or polycrystalline silicon. An encapsulating bag for encapsulating the solar module may be provided to protect the surface of the sunshade cloth. Said bag may be openable and closable via a slide fastener, particularly a zipper. The bag is particularly useable for the protection of the solar modules during storage of the sunshade in a folded state.

The solar module comprises at least one thin-film solar cell. Particularly, all solar cells of the solar module are realized as thin-film solar cells. The photovoltaic thin films may be directly printed and, if necessary, encapsulated on the surface of the sunshade cloth, and they have a smaller thickness and therefore cause a smaller load to the sunshade cloth of the sunshade. Besides, the surface of the sunshade cloth appears smoother. This enables a lightweight and visually lighter appearance of the sunshade cloth. The solar modules are flat and smooth and do not cause a high mechanical load to the sunshade cloth and, thus, improve the convenience of use.

In one embodiment, the sunshade is adapted for a lifting movement, particularly a manual lifting movement. Particularly, the height above the ground of the sunshade cloth can be adapted to meet the needs of the user. This can be realized e.g. by conventional sliding and/or fixing techniques such as telescopic columns.

In another embodiment, the sunshade comprises a table with a hole. The table is suitable to be mounted on the external upright column of the sunshade by inserting the external upright column into the hole and fixing it with at least one fixing element.

Particularly, table and sunshade are adapted to be connected and separated. Thus, table and sunshade can be operated as a combination as well as two isolated items. The table may be round and placed at a height which is comfortable for users to sit in front of it. It may be suitable as an outdoor dining table.

The hole is particularly arranged in the center of the table. The fixing element may be a pin structure, e.g. a spring pin, or a pin secured by a lock pin. It may be arranged on the table and/or on the sunshade stand and it may comprise a corresponding element arranged on the respective other part. After inserting the sunshade stand inside the table and rotating the sunshade to the appropriate position, the table can be fixed, e.g. by inserting or turning the fixing element. In one embodiment, a spring pin structure is located under the table, enabling the combination and separation of table and sunshade stand through rotation and pressing. In the combined state, the table cannot be rotated relative to the sunshade stand.

The connecting structure between the sunshade and the table combines the table and sunshade through simple methods and may enable them to interchangeably achieve electronic functions. At the same time, it ensures that the table and sunshade can be easily separated without affecting the operation of the electronic functions. The advantage of this embodiment is the easy combination and separation of the sunshade and the table.

In one embodiment, the sunshade comprises an input unit suitable for manual opening and/or closing of the sunshade. This input unit can be realized as a handle which enables the user to open and close the sunshade in case of emergencies such as empty battery or any kind of defect. However, it can also be used when the electricity functions normally, e.g. when the electric storage device is fully charged. The handle may comprise a latch structure which is to be inserted into a suitably arranged locating hole on the sunshade frame, particularly through rotation and pressing movement, to attain its functionality after combining table and sunshade. Particularly, it is ensured that any electric current that is created through manually turning the handle is completely isolated from the electric circuit, so that it will not cause any harm. The handle may further comprise a decoupling device, e.g. in form of a button. When activating the disconnecting device, e.g. by pressing the button, the motor is decoupled from the opening/closing mechanism of the sunshade and the handle is coupled instead. In other words, the motor gear releases and connects to the screw mechanism. With subsequent rotation of the handle, the sunshade can be opened or closed.

A second aspect of the invention is a sun shading system, comprising a sunshade according to the invention and a table. The table comprises a hole which is suitable to be mounted on an external upright column of the sunshade by inserting the external upright column into the hole and fixing it with at least one fixing element. The table comprises a control chip, an electric storage device, a wireless charging device, at least one USB interface and a Wi-Fi enhancement device which are electrically or electronically connectable or connected, respectively, to the control chip. The sunshade comprises at least one solar module which is electrically connectable or connected to the electric storage device, and the electric storage device is adapted to provide electrical energy to the electrical driving mechanism which is mechanically connected to the sunshade frame so that the sunshade frame is adapted to be opened and closed by the electrical driving mechanism. The sunshade comprises at least one light emitting member which is electrically connectable or connected to the electric storage device and the control device comprises an input unit which is adapted to control the electrical driving mechanism and the light emitting member.

Particularly, the table board is round, suitable for a direct combination and fixation on the sunshade stand and placed at a convenient height when the user is sitting. The sunshade cloth may comprise an inner sunshade cloth and a roof cloth, wherein the said cloths combined deliver an attractive optical impression of layers.

The sunshade stand may comprise a plurality of upper struts and lower struts, wherein the upper struts retain the sunshade cloth, which are hinged on an upper suspension head located on top of an external upright column. A top end of each lower strut is hinged on a middle portion of the upper strut and a bottom end of the lower strut is hinged on a slide which is slideably connected to the sunshade stand. Middle struts and a lower suspension head may be arranged, as described.

The table and the umbrella are combinable and separable by use of the fixing element, as described.

In one embodiment, the electric motor operates on 6V. It is connected to a gear structure. Above the motor, inside the sunshade frame is the rack of a rack and pinion structure. The motor comprises a pinion structure, engaged with the rack. As the motor operates, it rotates the pinion and the internal upright column rises or drops due to the movement of the rack.

This enables the opening and closing of the sunshade. As described, the motor can be decoupled from the opening/closing mechanism by means of a disconnecting device, to achieve manual opening/closing.

The table comprises a wireless charging device, a Wi-Fi enhancement device which may be located inside a control device and a USB interface, particularly for charging of electronic devices which is particularly arranged at the bottom of the table. The control chip, particularly arranged inside the control device, may comprise the Wi-Fi enhancement module which can strengthen a weak Wi-Fi signal.

The electrical or electronical connection is particularly realized by means of internal wires. The electricity produced by the solar module is transmitted through the internal wire to the control chip before being transmitted to the electric storage device, particularly located within the control device. This may be controlled by the control chip. The control chip is further connected to the electrical driving mechanism which is particularly realized as electric motor and positioned inside the sunshade frame.

The sunshade comprises at least one light emitting member attached to at least one lower strut, upper strut and/or middle strut. A physical switch, e.g. a main switch may be arranged, particularly below the control device, which is adapted to disconnect or close the respective part of the electric circuit if switched off. A DC charging port may be arranged which is connectable or connected to the physical switch for the case of emergency charging. Particularly, the physical switch does not cause loss of electricity while turning on or off the device. The DC charging port may be suitable to charge the electric storage device with an AC power source, e.g. a power supply network, in case that the solar energy is running out in rainy days.

Particularly, wireless charging, USB charging and Wi-Fi enhancement are adapted to operate immediately and continuously after switching on the device. The light emitting member as well as opening and closing of the sunshade by the electrical driving mechanism can be operated through the input unit which can be realized as a remote control. The control chip may possess a software service platform and be adapted to collect and forward information from the user through cloud data technology, such as health index, weather forecast etc. Particularly, it provides a smart platform, so the sun shading system acts as successfully digitalised outdoor equipment.

Particularly, a certain area on the table board comprises the wireless charging device and is thus suitable for wireless charging of electronic devices. The wireless charging functionality may be based on inductive coupling technology and provide stable charging current for electronic products with a suitable wireless charging functionality. The electronic product is to be placed on the table board and aligned with the wireless charging device and the charging begins. In case of a metal object, the device may start an alarm sound, whereas it may send out a tone to indicate normal functioning when an appropriate device is applied. The USB interface may be realized as a fast charging port and/or provide a charging current of up to 2.1A. A plurality of USB interfaces may be arranged.

Particularly, the table and the sunshade are electrically connectable by a plug structure in order to connect the respective parts of the electric circuit. For example, a socket or plug structure may be located under the table, particularly beneath the connecting element, i.e. the spring pin, but independent from the connecting element, to insert the plug of the connecting cable. When the plug is inserted into the sunshade stand, it achieves electronic interactive functions. By this means, the electrical connection of the table and sunshade is completed, and the cable is used to connect the table to transmit data and/or electric current. Especially the solar module can be connected to the electric storage device and, thus, to the remaining electric or electronic devices. Electrical energy can now be transferred from the sunshade to the electric storage device on the table. According to the needs, the table can be used separately, and the separated parts are suitable to function independently.

The solar cell may be realized as thin-film cell comprising copper indium gallium selenide or as silicon cell. It may be encapsulated on the sunshade cloth using a high temperature heating method.

The main functions are wireless charging, USB interface charging, atmospheric lighting, Wi-Fi enhancement and opening/closing of the sunshade cloth through electric remote control as well as via handle. The control programs of the electric/electronic functions may all be integrated on the control chip. In addition, all features may be realized as modular components with easy accessibility and be compatible with various electronic featured products. It is particularly possible to install additional electric components, according to the needs of the user, such as Bluetooth, speakers etc. This technical solution aims to develop a diversified service platform, being compatible with various electronic products through thoughtful design. The sunshade can transform solar energy into electricity and store it in the electric storage device inside the table. The electric storage device provides energy to both the sunshade and the table which are connected through cables. The table and sunshade can work independently after being separated. The sun shading system is suitable to be combined with various modular electronic devices and is not limited to one particular function.

In one embodiment, the solar module is placed on the sunshade cloth. The electric storage device which is connected to the control device is realized as at least one replaceable lithium-based battery and connected the solar module in order to be charged though solar power depending on the energy level when the product is used outdoors during daytime. It is adapted to automatically disconnect the charging circuit after the battery is fully charged in order to protect it, having a capacity of 10Ah at 7.4V. Any damaged or empty battery can be easily replaced.

The strut with the light emitting member, particularly realized as LED light source for atmospheric lighting, may comprise a photoconductive material which may be positioned inside the strut. The electricity and control device of the LED light source may be connected to or placed on the control chip. The photoconductive material may be arranged between the LED light sources and suitable to control the light emission. The control chip may possess a sending and receiving unit which enables a wireless operation function. Particularly, through operation of the suitable buttons on the remote control, the corresponding functions including turning on or off the lighting can be achieved.

In one embodiment, the table of the sun shading system comprises several status indicators, such as a general operation indicator, indicating that the device functions normally, and indicators for the battery level.

The advantage of the sun shading system according to the invention is that it fulfills the needs of charging electronic devices, internet surfing and lighting function at night and is thus suitable for day- and nighttime use, users with different needs and a wide range of locations.

In one embodiment, the multifunction table-umbrella with solar technology is able to be operated as table and parasol in one, and it is possible to separate them as well. The table-umbrella as one possesses solar energy generation device, energy storage device, parasol automatic opening and closing function, remote or manually controlled lifting movement, atmospheric lighting, wireless charging, USB interface charging and Wi-Fi enhancement function.

In another embodiment, the described multifunction table-umbrella with solar technology has the following special features: the parasol is inserted into the table through the umbrella hole, it uses fixed spring pin structure as combination method and inserted the plug structure to the umbrella pole in order to connect the electric circuit. The table possesses a pole structure, the pole is hollow and it is one product as a whole. According to the needs, it can be applied separately, and the separated parts are able to function independently.

In a further embodiment, the described multifunction table-umbrella with solar technology has the following special features: the described umbrella cloth has solar chips which observe solar energy and transform it into electricity. The electricity is transmitted through the internal wire to the circuit central inside the table, then it is transmitted with control of the chip to the energy storage device within the circuit central. At the same time, the control chip is connected to the power motor inside the umbrella pole, lighting on the umbrella rib, wireless charging transmitter on the table, USB charging port at the bottom of the table and Wi-Fi enhancement device inside the central circuit chip through port and wire. After turning on the device, wireless charging, USB charging and Wi-Fi enhancement are operating continuously. The atmospheric lighting on the umbrella rib as well as opening and closing of the umbrella cloth is operated through the remote control.

In a further embodiment, the described multifunction table-umbrella with solar technology has the following special features: the handle structure at the umbrella pole is designed to be used in case of emergencies such as no electricity, energy damage or weak point, however, it can also be used when the electric circuit functions normally. This handle structure special patented design ensures that the electric current created through turning the handle is completely isolated from the circuit system, so that it will not cause harm to the circuit. When pressing the bottoms at the side of the handle, the motor gear releases and connects to the screw mechanism, then turn and rotate the handle to achieve the above function.

In a first particular embodiment, a sunshade is presented, comprising a sunshade frame, a sunshade cloth, solar chips, a storage battery, and an electrical driving mechanism. The sunshade cloth covers the sunshade frame, the solar chips are disposed on an upper surface of the sunshade cloth, the solar chips are electrically connected with the storage battery, and the storage battery provides electrical energy to the electrical driving mechanism disposed on the sunshade frame so that the sunshade frame, driven by the electrical driving mechanism, achieves opening and closing motion.

In a second particular embodiment based on the first particular embodiment, the sunshade further comprises a control device disposed on the sunshade frame. The control device comprises a control chip and at least one function control switch, the control chip is electrically connected with the storage battery, the at least one function control switch is electrically connected with the control chip. One of the at least one function control switch is used to control the electrical driving mechanism to achieve opening and closing of the sunshade.

In a third particular embodiment based on the second particular embodiment, the control device further comprises a USB interface which is electrically connected with the storage battery and the control chip, respectively.

In a forth particular embodiment based on the second particular embodiment, the control device further comprises: a wireless transceiving module which enables a network cable interface and/or a phone card insertion slot; wherein the wireless transceiving module is connected with the control chip.

In a fifth particular embodiment based on the second particular embodiment the control device further comprises: a detection module and a display screen. The detection module is connected with the storage battery and the control chip respectively to detect power storage situations of the storage battery; the display screen is electrically connected with the detection module to display electrical power quantity in the storage battery.

In a sixth particular embodiment based on the first particular embodiment, the sunshade frame comprises an external upright column, an internal upright column, an upper sunshade disc, a middle sunshade disc, a lower sunshade disc, an upper sunshade rib, a middle sunshade rib and a lower sunshade rib. The upper sunshade disc is disposed at a top end of the internal upright column, the middle sunshade disc is disposed at a top end of the external upright column and the external upright column is a hollow tubular structure. The internal upright column passes through the middle sunshade disc and is slideably connected in an inner cavity of the external upright column. A bottom end of the internal upright column is connected with the electrical driving mechanism built in a pipe cavity of the external upright column, and the lower sunshade disc is slideably connected on the external upright column. A top end of the upper sunshade rib is hinged to the upper sunshade disc and a bottom end of the upper sunshade rib is suspended. A top end of the lower sunshade rib is hinged to a middle portion of the upper sunshade rib and a bottom end of the lower sunshade rib is hinged to the lower sunshade disc. A top end of the middle sunshade rib is hinged to the middle sunshade disc, a bottom end of the middle sunshade rib is hinged to a middle portion of the lower sunshade rib and the sunshade cloth covers the upper sunshade rib.

In a seventh particular embodiment based on the sixth particular embodiment, the electrical driving mechanism comprises a motor and a screw. The motor is electrically connected with the storage battery, the screw is connected with a motor shaft of the motor, and a bottom end of the internal upright column is connected with the screw.

In an eighth particular embodiment based on the sixth particular embodiment, the electrical driving mechanism comprises a motor, a traction wheel and a traction cord. The motor is electrically connected with the storage battery, the traction wheel is mounted on a motor shaft of the motor, one end of the traction cord is fixed on the traction wheel, and a bottom end of the internal upright column is connected to the other end of the traction cord.

In a ninth particular embodiment based on the sixth particular embodiment, the sunshade further comprises a plurality of spray nozzles. The plurality of spray nozzles are distributed on one or more of the external upright column, the upper sunshade disc, the middle sunshade disc, the lower sunshade disc and the upper sunshade rib. Each of the plurality of spray nozzles is electrically connected with the control chip disposed on the sunshade frame and included by the control device. The control device further comprises at least one function control switch, the control chip is electrically connected with the storage battery, the at least one function control switch is electrically connected with the control chip. One of the at least one function control switch is used to control on and off of the spray nozzles.

In a tenth particular embodiment based on the sixth particular embodiment, the sunshade further comprises a plurality of light emitting members. The plurality of light emitting members are arranged on one or more of the upper sunshade rib, the middle sunshade rib and the lower sunshade rib, and each of the light emitting members is electrically connected with the storage battery.

In an eleventh particular embodiment based on the tenth particular embodiment, the upper sunshade rib, the middle sunshade rib and the lower sunshade rib all are hollow tubular structures, and the light emitting member is a LED strip built in the pipe cavity of the upper sunshade rib, the middle sunshade rib or lower sunshade rib.

In a twelfth particular embodiment based on the first particular embodiment, the sunshade cloth comprises an inner sunshade cloth and a roof cloth. The roof cloth is disposed on top of the sunshade and covers an upper portion of the inner sunshade cloth, and through holes are provided between the roof cloth and the inner sunshade cloth.

In a thirteenth particular embodiment based on the twelfth particular embodiment, the solar chips are disposed on an upper surface of the inner sunshade cloth and/or an upper surface of the roof cloth.

In a fourteenth particular embodiment based on the first particular embodiment, the solar chips are photovoltaic thin films.

The invention is not limited to the alternatives described herein. Furthermore, all described embodiments and alternatives of the invention may be combined.

The invention is further illustrated and characterized by the following figures that show certain examples from which further embodiments and advantages can be drawn. These figures are meant to illustrate the invention but not to limit its scope. The embodiments described below are only partial embodiments of the present invention, not all possible embodiments. All other embodiments obtained by those having ordinary skill in the art without making inventive efforts based on the embodiments in the present invention all fall within the protection scope of the present invention.
Fig. 1 is a perspective view of a sunshade according to the invention from above.
Fig. 2 is a perspective view of a control device of a sunshade according to the invention.
Fig. 3 is a circuit block diagram of a sunshade according to the invention.
Fig. 4 is a perspective view of a sunshade frame of a sunshade according to the invention from below.
Fig. 5 is a side view of a sunshade according to the invention.
Fig. 6 is an enlarged detail of the electrical driving mechanism of the sunshade shown in Fig. 5.
Fig. 7 is a perspective view of a sunshade according to the invention from below.
Fig. 8 is a sectional view of an upper strut with a light emitting member according to the invention.
Fig. 9 is a perspective view of a sunshade according to another embodiment of the invention from above.
Fig. 10 is a perspective view of a sunshade according to a further embodiment of the invention from above.
Fig. 11 is a side view of a sunshade according to a further embodiment of the invention in an unfolded state.
Fig. 12 shows the sunshade from fig. 11 in a folded state.

Technical solutions of in embodiments of the present invention will be described clearly and completely with reference to the figures in embodiments of the present invention. Obviously, the embodiments described below are only partial embodiments of the present invention, not all embodiments. All other embodiments obtained by those having ordinary skill in the art without making inventive efforts based on the embodiments in the present invention all fall within the protection scope of the present invention.

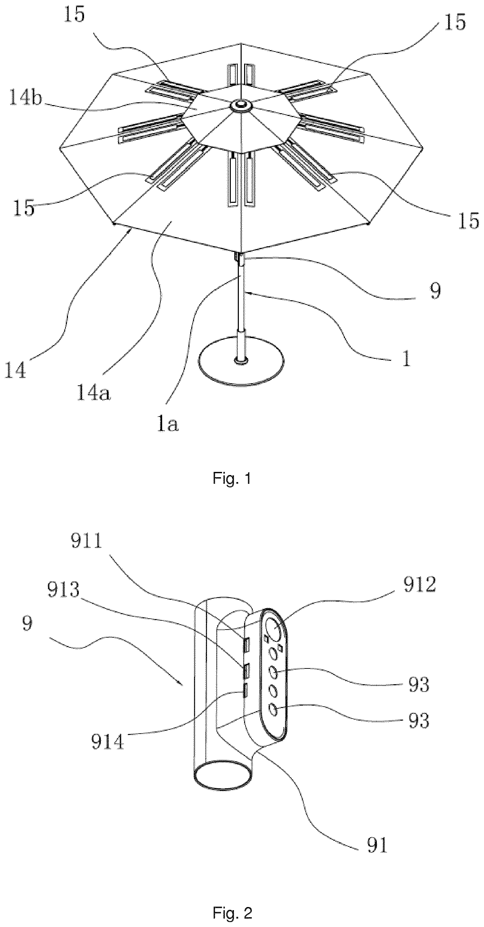

Fig. 1 is a structural schematic view of a sunshade according to an embodiment of the present invention. As shown in Fig. 1, the sunshade comprises a sunshade frame 1, a sunshade cloth 14, a solar module 15, an electric storage device 8 and an electrical driving mechanism; wherein the sunshade cloth 14 covers the sunshade frame, the solar module 15 is positioned on an upper surface of the sunshade cloth 14, the solar module 15 is electrically connected to the electric storage device 8, and the electric storage device 8 provides electrical energy to the electrical driving mechanism arranged on the sunshade frame 1 so that the sunshade frame 1, driven by the electrical driving mechanism, achieves opening and closing motion. The sunshade comprises a control device 9 arranged on the sunshade frame 1 to control the opening and closing and, if applicable, other electronic or electric functions.

In an embodiment of the present invention, the sunshade cloth 14 may comprise an inner sunshade cloth 14a and a roof cloth 14b, wherein the roof cloth 14b is disposed on top of the sunshade and covers an upper portion of the inner sunshade cloth 14a, and through holes are provided between the roof cloth 14b and the inner sunshade cloth 14a for purpose of light and air permeability purpose.

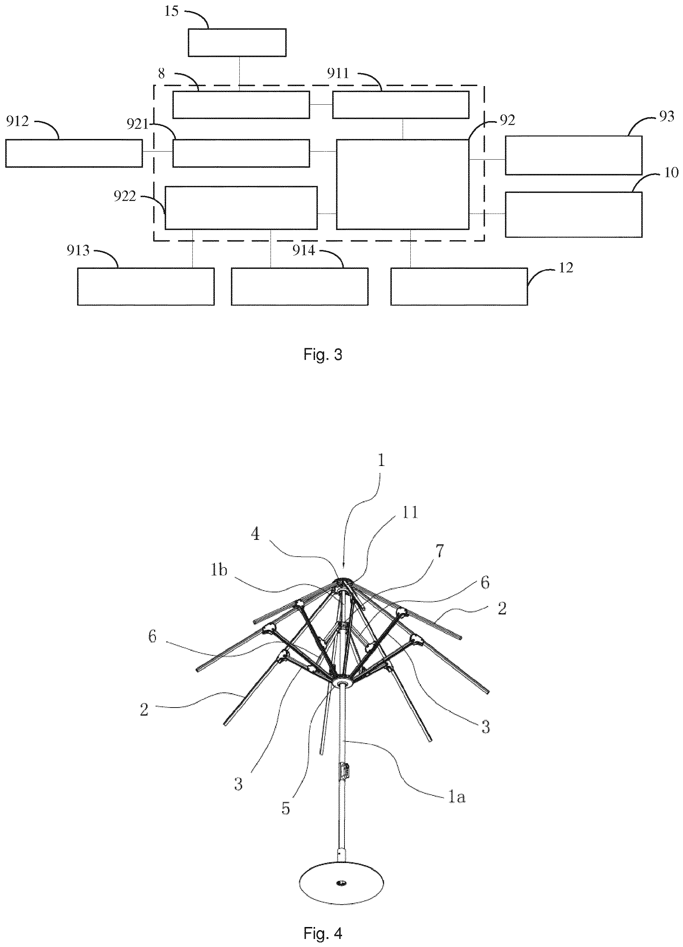

Fig. 2 is a structural schematic view of a control device of a sunshade according to an embodiment of the present invention. Fig. 3 is a circuit block diagram of a sunshade according to an embodiment of the present invention. As shown in Fig. 2 and Fig. 3, the control device 9 may comprise a control chip 92 and at least one input unit 93. The control chip 92 is electrically connected to the electric storage device 8 and the input unit 93 is electrically connected to the control chip 92 to control the electrical driving mechanism to achieve opening and closing of the electrical sunshade as well as switching operation of other additional functions on the sunshade. The input units may be adapted to fit the different electrical or electronical functions. Hence, if the control chip 92 may perform multiple functions of use, each input unit 93 corresponds to one of the functions of use.

The control device 9 comprises a USB interface 911 which is electrically connected to the electric storage device 8 and the control chip 92, respectively. The USB interface 911 is used to provide a stable wired charging current for electronic products, increases functionality of the sunshade when being used outdoor, and further meets needs of people's leisure lift.

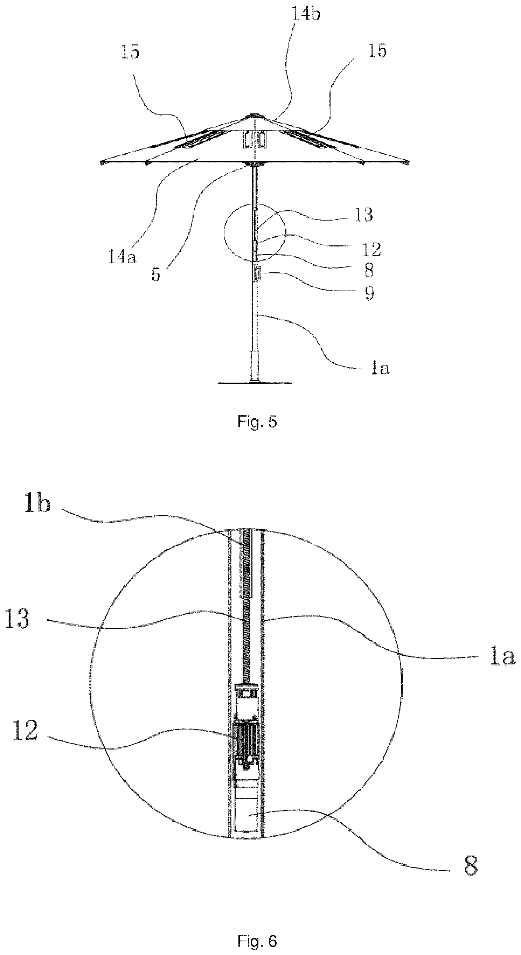

The presented sunshade comprises a transceiving device (module) 922 which enables wireless routing, and/or a network cable interface and/or a phone card and/or SIM card insertion slot. The wireless transceiving device 922 is connected to the control chip 92. For example, as shown in Fig. 5, a network cable interface 913 or an insertion slot 914 for inserting a phone card and/or SIM card may be integrated into the housing 91 of the control device 9. The network cable interface 913 or the insertion slot 914 for inserting a phone card and/or a SIM card are respectively electrically connected to the wireless transceiving device 922 so that the sunshade can provide wireless Internet access function.

The presented sunshade comprises a detection module 921 and a display screen 912; wherein the detection module 921 is connected to the electric storage device 8 and the control chip 92 respectively to detect power storage situations of the electric storage device 8; the display screen 912 is electrically connected to the detection module 921 to display electrical power quantity in the electric storage device 8.

A specific procedure for controlling the detection module 921 may be as follows: the detection module 921 detects the electrical power quantity in the storage battery 8 and compares it with a preset value of the control chip 92 so as to display the electrical power quantity of the storage battery 8 on the display screen 912 in the form of percentage. When the storage battery 8 is in a not full state, the control chip 92 enables the storage battery 8 to communicate with the solar chips 15 so that power generation function of the solar chips 15 charges the storage battery 8; when the storage battery 8 is detected in a full state, the control chip 92 automatically turns off the charging circuit.

Electronic components in the embodiment of the present invention all are fitted in a modularized manner. In respect of production design, other electronic functions may also be increased to meet consumers' different needs, e.g., electronic function components such as Bluetooth and sound equipment may be added to further enrich functionality of sunshade products. In addition, such modularized design may further improve flexibility of production of the products, for example, the USB interface 911 needn't be installed in a specificmodel of sunshade product, and the USB interface 911 needn't be selected and installed upon production of this sunshade. The present invention does not limit the types and number of electronic function modules included in the control device 9 of a specificallyproduced sunshade.

Fig. 4 is a structural schematic view of a sunshade frame of a sunshade according to an embodiment of the present invention. As shown in Fig. 4, the sunshade frame 1 comprises an external upright column 1a, an internal upright column 1b, an upper suspension head 4, a lower suspension head 7, a slide 5, eight upper struts 2, four middle struts 6 and eight lower struts 3.

The upper suspension head 4 is arranged on a top end of the internal upright column 1b, the lower suspension head 7 is arranged on a top end of the external upright column 1a, the external upright column 1a is a hollow tubular structure, the internal upright column 1b passes through the lower suspension head 7 and is slideably connected in an inner cavity of the external upright column 1a, a bottom end of the internal upright column 1b is connected to the electrical driving mechanism arranged in the cavity of the external upright column 1a, and the slide 5 is slideably connected on the external upright column 1a.

A top end of the upper strut 2 is hinged on the upper suspension head 4, a bottom end of the upper strut 2 is suspended, a top end of the lower strut 3 is hinged on a middle portion of the upper strut 2, a bottom end of the lower strut 3 is hinged on the slide 5, a top end of the middle strut 6 is hinged on the lower suspension head 7, a bottom end of the middle strut 6 is hinged on a middle portion of the lower strut 3, and the sunshade cloth 14 covers the upper strut 2.

Rise of the upper sunshade disc 4 may bring the lower sunshade disc 5 to rise. Meanwhile, since the middle sunshade disc 7 remains stationary, when the lower sunshade disc 5 rises, the bottom end of the middle sunshade rib 6 rises and the top end of the lower sunshade rib 3 expands outward to thereby further bring the upper sunshade rib 2 to expand and achieve electrical opening of the sunshade. Likewise, the closing of the sunshade may be implemented by executing a procedure reverse to the above procedure. In addition, the electrical driving mechanism is built in the external upright column 1a, thereby providing pleasant appearance and stable performance and meanwhile avoiding damages to the electrical driving mechanism due to wind and rain erosion.

Fig. 5 is a side view of a sunshade according to an embodiment of the invention. Fig. 6 is a partially enlarged detail of an electrical driving mechanism of the sunshade shown in Fig. 5. As shown in Fig. 5 and Fig. 6, the electric storage device 8 is arranged inside the external upright column 1a, the electrical driving mechanism comprises a motor 12 and a screw 13, the motor 12 is electrically connected to the electric storage device 8, the screw 13 is mechanically connected to a motor shaft of the motor 12, and a bottom end of the internal upright column 1b is connected to the screw 13. As such, rotation of the motor shaft of the motor 12 may bring the screw to rotate realizing an ascending motion of the internal upright column 1b relative to the screw 13.

In another embodiment of the present invention, the electrical driving mechanism comprises a motor 12, a traction wheel and a traction cord, the motor 12 is electrically connected with the storage battery 8, the traction wheel is mounted on the motor shaft of the motor 12, one end of the traction cord is fixed on the traction wheel, and a bottom end of the internal upright column 1b is connected to the other end of the traction cord. As such, the traction cord is driven by the motor 12 to achieve rise and fall of the internal upright column 1b to control the opening and closing of the sunshade.

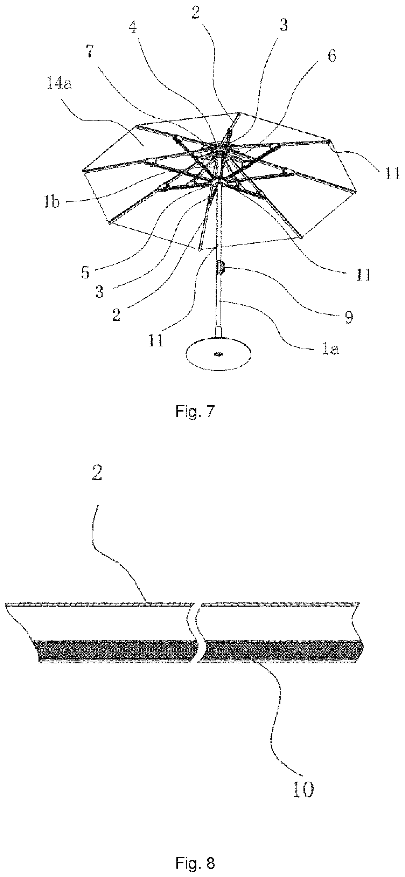

As shown in Fig. 7, the sunshade comprises a plurality of spray nozzles 11. The plurality of spray nozzles 11 is distributed on the external upright column 1a, the upper suspension head 4, the lower suspension head 7, the slide 5 and the upper strut 2, and each spray nozzle 11 is electrically connected to the control chip 92.

In an embodiment of the present invention, the sunshade may further comprise a plurality of light emitting members 10, wherein the light emitting members 10 are arranged on the upper strut 2, the middle strut 6 and the lower strut 3, and each light emitting member 10 is electrically connected to the electric storage device 8.

At this time, on the control device 9 is provided at least one function control switch 93 for controlling on and off of these spray nozzles 11. These spray nozzles 11 can convert water into mist to create a touch of coolness in a high-temperature environment and function to lower temperature. Water for spraying may be provided by a peripheral device, or a water pipe is provided in the external upright column 1a or upper sunshade disc 4 to feed water.

In an embodiment of the present invention, the sunshade may further comprise a plurality of light emitting members 10, the plurality of light emitting members 10 are arranged on the upper sunshade rib 2, the middle sunshade rib 6 and the lower sunshade rib 3, and each light emitting member 10 is electrically connected with the storage battery 8. The light emitting members 10 may create atmospheric lighting and provide illumination for consumers at night.

Fig. 8 shows a hollow tubular structure, an upper strut 2, forming a cavity. Middle struts 6 and/or lower struts 3 may be designed in an analogous way. Light emitting members 10 are arranged in the cavity formed by the pipe. The light emitting members 10 are realized as LED strip, i.e. an illuminating strip comprising LEDs.

Figures 9 and 10 show different arrangements of solar modules 15. In Fig. 9, small solar modules 15 are positioned on the roof cloth 14b. In Fig. 10, in addition, large solar modules 15 are positioned on the inner sunshade cloth 14a. The present invention does not limit the positions of the solar chips 15.

The LED strip is made of a hard material and can be inserted in the sunshade rib quickly and conveniently. The light-emitting member 10 may further be a LED belt arranged axially along the upper sunshade rib 2 or middle sunshade rib 6 or lower sunshade rib 3 and close to an wall surface of the upper sunshade rib 2 or middle sunshade rib 6 or lower sunshade rib 3, or a bulb hung on the upper sunshade rib or middle sunshade rib or lower sunshade rib. The present invention does not limit the types of the light emitting members 10.

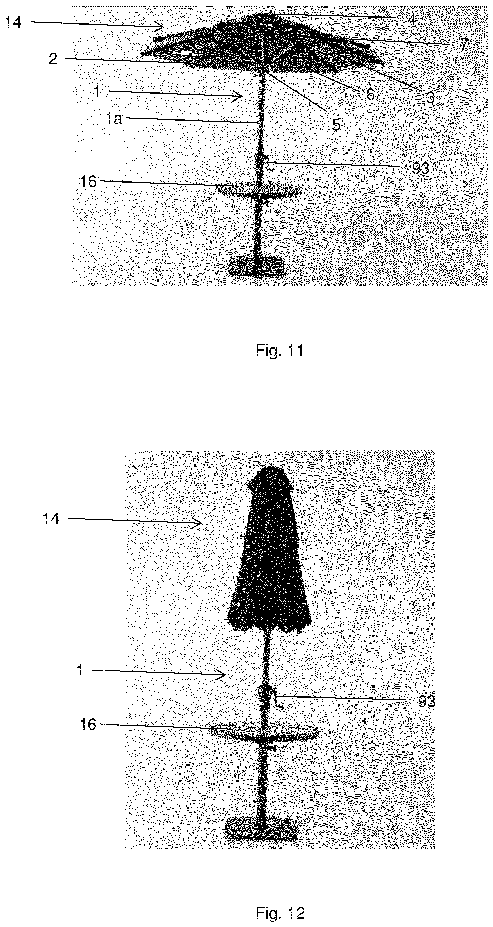

Fig. 11 shows an embodiment of the sunshade comprising a round table 16 which is mounted on the sunshade frame. The table 16 comprises a centrally arranged hole through which the external upright column 1a is inserted. It is fixed with a spring pin. The sunshade further comprises an input unit 93 which is realized as a handle. The input unit 93 is suitable for manual opening and/or closing of the sunshade. As the sunshade is unfolded, the uppers strut 2, the lower struts 3 and the middle struts 6 are visible as well as the upper suspension head 4, the lower suspension head 7 and the slide 5. Fig. 12 shows the sunshade from Fig. 11 in a folded state.

**List of reference signs**

| | |
|---|---|
| sunshade frame | 1 |
| external upright column | 1a |
| internal upright column | 1b |
| light emitting member | 10 |
| spray nozzles | 11 |
| motor | 12 |
| screw | 13 |
| sunshade cloth | 14 |
| inner sunshade cloth | 14a |
| roof cloth | 14b |
| solar module or solar chips | 15 |
| table | 16 |
| upper strut or upper sunshade rib | 2 |
| lower strut or lower sunshade rib | 3 |
| upper suspension head or upper sunshade disc | 4 |
| slide or lower sunshade disc | 5 |
| middle strut or middle sunshade rib | 6 |
| lower suspension head or middle sunshade disc | 7 |
| electric storage device or storage battery | 8 |
| control device | 9 |
| housing | 91 |
| USB interface | 911 |
| display screen | 912 |
| network cable interface | 913 |
| insertion slot or phone card insertion slot | 914 |
| control chip | 92 |
| detection module | 921 |
| transceiving device or wireless transceiving module | 922 |
| input unit or function control switch | 93 |

## Claims

1. A Sunshade, comprising a sunshade frame (1), a sunshade cloth (14), at least one solar module (15), an electric storage device (8) and an electrical driving mechanism;
wherein the sunshade cloth (14) is retained by the sunshade frame (1), the solar module (15) is arranged on an upper surface of the sunshade cloth (14), the solar module (15) is electrically connectable or connected to the electric storage device (8), and the electric storage device (8) is adapted to provide electrical energy to the electrical driving mechanism which is mechanically connected to the sunshade frame (1) so that the sunshade frame (1) is adapted to be opened and closed by the electrical driving mechanism; wherein the sunshade frame (1) comprises an external upright column (1a), an internal upright column (1b), an upper suspension head (4), a lower suspension head (7), a slide (5), an upper strut (2), a middle strut (6) and a lower strut (3);
wherein the upper suspension head (4) is arranged on a top end of the internal upright column (1b), the lower suspension head (7) is arranged on a top end of the external upright column (1a), the external upright column (1a) is a hollow tubular structure, the internal upright column (1b) passes through the lower suspension head (7) and is slidably connected in an inner cavity of the external upright column (1a), the internal upright column (1b) is connected to the electrical driving mechanism arranged in a pipe cavity of the external upright column (1a), and the slide (5) is slidably connected on the external upright column (1a);
wherein a top end of the upper strut (2) is hinged on the upper suspension head (4), a bottom end of the upper strut (2) is suspended, a top end of the lower strut (3) is hinged on a middle portion of the upper strut (2), a bottom end of the lower strut (3) is hinged on the slide (5), a top end of the middle strut (6) is hinged on the lower suspension head (7), a bottom end of the middle strut (6) is hinged on a middle portion of the lower strut (3), and the sunshade cloth (14) is retained by the upper strut (2);
wherein the solar module (15) comprises at least one thin-film solar cell.

2. Sunshade according to claim 1, comprising a control device (9), particularly arranged on the sunshade frame (1), wherein the control device (9) comprises a control chip (92) and at least one input unit (93); the control chip (92) is electrically connectable or connected to the electric storage device (8), the input unit (93) is electrically connectable or connected to the control chip (92), wherein the input unit (93) is adapted to control the electrical driving mechanism.

3. Sunshade according to claim 2, wherein the control device (9) comprises a USB interface (911) which is electrically connectable or connected to the electric storage device (8) and, particularly, to the control chip (92).

4. Sunshade according to at least one of the claims 2 and 3, wherein the control device (9) comprises a transceiving device (922) suitable to receive Internet data and provide Wi-Fi signals, which is coupled to the control chip (92) for data transmission.

5. Sunshade according to at least one of the claims 2-4, wherein the control device (9) comprises a detection module (921) for detection of the charging level of the electric storage device (8) and a display screen (912) for displaying the charging level of the electric storage device (8);
wherein the detection module (921) is connectable or connected to the electric storage device (8) and the control chip (92), respectively, and the display screen (912) is electrically connectable or connected to the detection module (921).

6. Sunshade according to one of the claims 1-5, wherein the electrical driving mechanism comprises a motor (12) and a screw (13), wherein the motor (12) is electrically connectable or connected to the electric storage device (8), the screw (13) is mechanically connected to a motor shaft of the motor (12), and the internal upright column (1b) is connected to the screw (13).

7. Sunshade according to one of the claims 1-5, wherein the electrical driving mechanism comprises a motor (12), a traction wheel and a traction cord, wherein the motor (12) is electrically connectable or connected to the electric storage device (8), the traction wheel is mounted on a motor shaft of the motor (12), one end of the traction cord is fixed on the traction wheel, and the internal upright column (1b) is connectable or connected to the other end of the traction cord.

8. Sunshade according to at least one of the preceding claims, comprising a plurality of spray nozzles (11); wherein the plurality of spray nozzles (11) is distributed on at least one of the external upright column (1a), the upper suspension head (4), the lower suspension head (7), the slide (5) and the upper strut (2); wherein each spray nozzle (11) is electrically connectable or connected to the control chip (92).

9. Sunshade according to at least one of the preceding claims, comprising a plurality of light emitting members (10), wherein the light emitting members (10) are arranged on one or more of the upper strut (2), the middle strut (6) and the lower strut (3); and each of the light emitting members (10) is electrically connectable or connected to the electric storage device (8);
in particular, wherein the upper strut (2), the middle strut (6) and the lower strut (3) are at least partially hollow tubular structures forming cavities, and the light emitting members (10) are realized as LED strips, wherein the light emitting members (10) are at least partially arranged in the cavities of the upper strut (2), the middle strut (6) and/or the lower strut (3).

10. Sunshade according to at least one of the preceding claims, wherein the sunshade cloth (14) comprises an inner sunshade cloth (14a) and a roof cloth (14b), wherein the roof cloth (14b) is positioned on top of the sunshade and covers an upper portion of the inner sunshade cloth (14a), and through holes are provided between the roof cloth (14b) and the inner sunshade cloth (14a);
in particular, wherein the solar module (15) is positioned on an upper surface of the inner sunshade cloth (14a) and/or an upper surface of the roof cloth (14b).

11. Sunshade according to at least one of the preceding claims, comprising a table (16) with a hole, wherein the table (16) is suitable to be mounted on the external upright column (1a) of the sunshade by inserting the external upright column (1a) into the hole and fixing it with at least one fixing element.

12. Sunshade according to at least one of the preceding claims, comprising an input unit (93) suitable for manual opening and/or closing of the sunshade.

13. Sun shading system, comprising a sunshade according to any of claims 1-10 or 12 and a table (16), wherein the table (16) comprises a hole which is suitable to be mounted on an external upright column (1a) of the sunshade by inserting the external upright column (1a) into the hole and fixing it with at least one fixing element;
wherein the table (16) comprises a control device (9) with a control chip (92), an electric storage device (8), a wireless charging device, at least one USB interface (911) and a Wi-Fi enhancement device, wherein the electric storage device (8), the wireless charging device, the USB interface (911) and the Wi-Fi enhancement device are electrically or electronically connectable or connected, respectively, to the control chip (92);
wherein the sunshade comprises at least one solar module (15) which is electrically connectable or connected to the electric storage device (8), and the electric storage device (8) is adapted to provide electrical energy to the electrical driving mechanism which is mechanically connected to the sunshade frame (1) so that the sunshade frame (1) is adapted to be opened and closed by the electrical driving mechanism;
wherein the sunshade comprises at least one light emitting member (10) which is electrically connectable or connected to the electric storage device (8) and the control device (9) comprises an input unit (93) which is adapted to control the electrical driving mechanism and the light emitting member (10).

## Patentansprüche

1. Sonnenschirm, aufweisend einen Sonnenschirmrahmen (1), einen Sonnenschirmstoff (14), mindestens ein Solarmodul (15), eine elektrische Speichervorrichtung (8) und einen elektrischen Antriebsmechanismus;
wobei der Sonnenschirmstoff (14) durch den Sonnenschirmrahmen (1) gehalten wird, das Solarmodul (15) auf einer Oberseite des Sonnenschirmstoffs (14) angeordnet ist, das Solarmodul (15) mit der elektrischen Speichervorrichtung (8) elektrisch verbindbar oder verbunden ist und die elektrische Speichervorrichtung (8) dazu eingerichtet ist, dem elektrischen Antriebsmechanismus, der mechanisch mit dem Sonnenschirmrahmen (1) verbunden ist, elektrische Energie zuzuführen, so dass der Sonnenschirmrahmen (1) dazu eingerichtet ist, durch den elektrischen Antriebsmechanismus geöffnet und geschlossen zu werden;
wobei der Sonnenschirmrahmen (1) eine äußere aufrechte Säule (1a), eine innere aufrechte Säule (1b), einen oberen Aufhängekopf (4), einen unteren Aufhängekopf (7), einen Schlitten (5), eine obere Strebe (2), eine mittlere Strebe (6) und eine untere Strebe (3) aufweist;
wobei der obere Aufhängekopf (4) an einem oberen Ende der inneren aufrechten Säule (1b) angeordnet ist, der untere Aufhängekopf (7) an einem oberen Ende der äußeren aufrechten Säule (1a) angeordnet ist, die äußere aufrechte Säule (1a) eine hohle Rohrstruktur ist, die innere aufrechte Säule (1b) durch den unteren Aufhängekopf (7) verläuft und in einem inneren Hohlraum der äußeren aufrechten Säule (1a) verschiebbar verbunden ist, die innere aufrechte Säule (1b) mit dem in einem Rohrhohlraum der äußeren aufrechten Säule (1a) angeordneten elektrischen Antriebsmechanismus verbunden ist und der Schlitten (5) an der äußeren aufrechten Säule (1a) verschiebbar verbunden ist;
wobei ein oberes Ende der oberen Strebe (2) am oberen Aufhängekopf (4) gelenkig gelagert ist, ein unteres Ende der oberen Strebe (2) aufgehängt ist, ein oberes Ende der unteren Strebe (3) an einem mittleren Abschnitt der oberen Strebe (2) gelenkig gelagert ist, ein unteres Ende der unteren Strebe (3) an dem Schlitten (5) gelenkig gelagert ist, ein oberes Ende der mittleren Strebe (6) am unteren Aufhängekopf (7) gelenkig gelagert ist, ein unteres Ende der mittleren Strebe (6) an einem mittleren Abschnitt der unteren Strebe (3) gelenkig gelagert ist und der Sonnenschirmstoff (14) durch die obere Strebe (2) gehalten wird;
wobei das Solarmodul (15) mindestens eine Dünnschichtsolarzelle aufweist.

2. Sonnenschirm nach Anspruch 1, aufweisend eine Steuervorrichtung (9), insbesondere am Sonnenschirmrahmen (1) angeordnet, wobei die Steuervorrichtung (9) einen Steuerchip (92) und mindestens eine Eingabeeinheit (93) aufweist; der Steuerchip (92) ist mit der elektrischen Speichervorrichtung (8) elektrisch verbindbar oder verbunden, die Eingabeeinheit (93) ist mit dem Steuerchip (92) elektrisch verbindbar oder verbunden, wobei die Eingabeeinheit (93) zum Steuern des elektrischen Antriebsmechanismus eingerichtet ist.

3. Sonnenschirm nach Anspruch 2, wobei die Steuervorrichtung (9) eine USB-Schnittstelle (911) aufweist, die mit der elektrischen Speichervorrichtung (8), und insbesondere mit dem Steuerchip (92), elektrisch verbindbar oder verbunden ist.

4. Sonnenschirm nach mindestens einem der Ansprüche 2 und 3, wobei die Steuervorrichtung (9) eine Sende-Empfangsvorrichtung (922) aufweist, die geeignet ist, Internetdaten zu empfangen und Wi-Fi-Signale bereitzustellen, die mit dem Steuerchip (92) zur Datenübertragung gekoppelt ist.

5. Sonnenschirm nach mindestens einem der Ansprüche 2-4, wobei die Steuervorrichtung (9) ein Erfassungsmodul (921) zum Erfassen des Ladezustands der elektrischen Speichervorrichtung (8) und einen Anzeigeschirm (912) zum Anzeigen des Ladezustands der elektrischen Speichervorrichtung (8) aufweist;
wobei das Erfassungsmodul (921) jeweils mit der elektrischen Speichervorrichtung (8) und dem Steuerchip (92) verbindbar oder verbunden ist und der Anzeigeschirm (912) mit dem Erfassungsmodul (921) elektrisch verbindbar oder verbunden ist.

6. Sonnenschirm nach einem der Ansprüche 1-5, wobei der elektrische Antriebsmechanismus einen Motor (12) und eine Schraube (13) aufweist, wobei der Motor (12) mit der elektrischen Speichervorrichtung (8) elektrisch verbindbar oder verbunden ist, die Schraube (13) mechanisch mit einer Motorwelle des Motors (12) verbunden ist und die innere aufrechte Säule (1b) mit der Schraube (13) verbunden ist.

7. Sonnenschirm nach einem der Ansprüche 1-5, wobei der elektrische Antriebsmechanismus einen Motor (12), ein Antriebsrad und eine Zugschnur aufweist,
wobei der Motor (12) mit der elektrischen Speichervorrichtung (8) elektrisch verbindbar oder verbunden ist, das Antriebsrad auf einer Motorwelle des Motors (12) montiert ist, ein Ende der Zugschnur auf dem Antriebsrad befestigt ist und die innere aufrechte Säule (1b) mit dem anderen Ende der Zugschnur verbindbar oder verbunden ist.

8. Sonnenschirm nach mindestens einem der vorhergehenden Ansprüche, aufweisend eine Vielzahl an Sprühdüsen (11); wobei die Vielzahl an Sprühdüsen (11) auf mindestens einer/m der äußeren aufrechten Säule (1a), des oberen Aufhängekopfes (4), des unteren Aufhängekopfes (7), des Schlittens (5) und der oberen Strebe (2) verteilt ist;
wobei jede Sprühdüse (11) mit dem Steuerchip (92) elektrisch verbindbar oder verbunden ist.

9. Sonnenschirm nach mindestens einem der vorhergehenden Ansprüche, aufweisend eine Vielzahl an lichtemittierenden Elementen (10), wobei die lichtemittierenden Elemente (10) auf einer oder mehreren der oberen Strebe (2), der mittleren Strebe (6) und der unteren Strebe (3) angeordnet sind; und jedes der lichtemittierenden Elemente (10) mit der elektrischen Speichervorrichtung (8) elektrisch verbindbar oder verbunden ist;
wobei insbesondere die obere Strebe (2), die mittlere Strebe (6) und die untere Strebe (3) zumindest teilweise hohle Rohrstrukturen sind, die Hohlräume bilden, und die lichtemittierenden Elemente (10) als LED-Streifen ausgebildet sind, wobei die lichtemittierenden Elemente (10) zumindest teilweise in den Hohlräumen der oberen Strebe (2), der mittleren Strebe (6) und/oder der unteren Strebe (3) angeordnet sind.

10. Sonnenschirm nach mindestens einem der vorhergehenden Ansprüche, wobei der Sonnenschirmstoff (14) einen inneren Sonnenschirmstoff (14a) und einen Dachstoff (14b) aufweist, wobei der Dachstoff (14b) auf dem Sonnenschirm positioniert ist und einen oberen Teil des inneren Sonnenschirmstoffs (14a) abdeckt und Durchgangslöcher zwischen dem Dachstoff (14b) und dem inneren Sonnenschirmstoff (14a) vorgesehen sind;
wobei insbesondere das Solarmodul (15) auf einer Oberseite des inneren Sonnenschirmstoffs (14a) und/oder einer Oberseite des Dachstoffs (14b) positioniert ist.

11. Sonnenschirm nach mindestens einem der vorhergehenden Ansprüche, aufweisend einen Tisch (16) mit einem Loch, wobei der Tisch (16) dazu geeignet ist, an der äußeren aufrechten Säule (1a) des Sonnenschirms montiert zu werden, indem die äußere aufrechte Säule (1a) in das Loch eingesetzt und mit mindestens einem Befestigungselement befestigt wird.

12. Sonnenschirm nach mindestens einem der vorhergehenden Ansprüche, aufweisend eine Eingabeeinheit (93), die zum manuellen Öffnen und/oder Schließen des Sonnenschirmes geeignet ist.

13. Sonnenschirmsystem, aufweisend einen Sonnenschirm nach einem der Ansprüche 1-10 oder 12 und einen Tisch (16), wobei der Tisch (16) ein Loch aufweist, das geeignet ist, an einer äußeren aufrechten Säule (1a) des Sonnenschirmes montiert zu werden, indem die äußere aufrechte Säule (1a) in das Loch eingesetzt und mit mindestens einem Befestigungselement befestigt wird;
wobei der Tisch (16) eine Steuervorrichtung (9) mit einem Steuerchip (92), eine elektrische Speichervorrichtung (8), eine drahtlose Ladevorrichtung, mindestens eine USB-Schnittstelle (911) und eine Wi-Fi-Verstärkungsvorrichtung aufweist, wobei die elektrische Speichervorrichtung (8), die drahtlose Ladevorrichtung, die USB-Schnittstelle (911) und die Wi-Fi-Verstärkungsvorrichtung mit dem Steuerchip (92) elektrisch oder elektronisch verbindbar oder verbunden sind;
wobei der Sonnenschirm mindestens ein Solarmodul (15) aufweist, das mit der elektrischen Speichervorrichtung (8) elektrisch verbindbar oder verbunden ist, und die elektrische Speichervorrichtung (8) dazu eingerichtet ist, dem elektrischen Antriebsmechanismus elektrische Energie zuzuführen, der mechanisch mit dem Sonnenschirmrahmen (1) verbunden ist, so dass der Sonnenschirmrahmen (1) dazu eingerichtet ist, durch den elektrischen Antriebsmechanismus geöffnet und geschlossen zu werden;
wobei der Sonnenschirm mindestens ein lichtemittierendes Element (10) aufweist, das mit der elektrischen Speichervorrichtung (8) elektrisch verbindbar oder verbunden ist, und die Steuervorrichtung (9) eine Eingabeeinheit (93) aufweist, die dazu eingerichtet ist, den elektrischen Antriebsmechanismus und das lichtemittierende Element (10) zu steuern.

## Revendications

1. Parasol, comprenant un châssis de parasol (1), un tissu de parasol (14), au moins un module solaire (15), un dispositif de stockage électrique (8) et un mécanisme d'entraînement électrique ; le tissu de parasol (14) étant retenu par le châssis de parasol (1), le module solaire (15) étant disposé sur une surface supérieure du tissu de parasol (14), le module solaire (15) pouvant être connecté, ou étant connecté, électriquement au dispositif de stockage électrique (8), et le dispositif de stockage électrique (8) étant conçu pour fournir de l'énergie électrique au mécanisme d'entraînement électrique, lequel est connecté mécaniquement au châssis de parasol (1) de telle sorte que le châssis de parasol (1) est conçu pour être ouvert et fermé par le mécanisme d'entraînement électrique ;
le châssis de parasol (1) comprenant une colonne montante externe (1a), une colonne montante interne (1b), une tête de suspension supérieure (4), une tête de suspension inférieure (7), une glissière (5), un montant supérieur (2), un montant médian (6) et un montant inférieur (3) ;
la tête de suspension supérieure (4) étant disposée sur une extrémité supérieure de la colonne montante interne (1b), la tête de suspension inférieure (7) étant disposée sur une extrémité supérieure de la colonne montante externe (1a), la colonne montante externe (1a) étant une structure tubulaire creuse, la colonne montante interne (1b) passant à travers la tête de suspension inférieure (7) et étant raccordée de façon coulissante dans une cavité intérieure de la colonne montante externe (1a), la colonne montante interne (1b) étant raccordée au mécanisme d'entraînement électrique disposé dans une cavité de tube de la colonne montante externe (1a), et la glissière (5) étant raccordée de façon coulissante à la colonne montante externe (1a) ;
une extrémité supérieure du montant supérieur (2) étant articulée sur la tête de suspension supérieure (4), une extrémité inférieure du montant supérieur (2) étant suspendue, une extrémité supérieure du montant inférieur (3) étant articulée sur une partie médiane du montant supérieur (2), une extrémité inférieure du montant inférieur (3) étant articulée sur la glissière (5), une extrémité supérieure du montant médian (6) étant articulée sur la tête de suspension inférieure (7), une extrémité inférieure du montant médian (6) étant articulée sur une partie médiane du montant inférieur (3), et le tissu de parasol (14) étant retenu par le montant supérieur (2) ;
le module solaire (15) comprenant au moins une cellule solaire en couches minces.

2. Parasol selon la revendication 1, comprenant un dispositif de commande (9), en particulier disposé sur le châssis de parasol (1), le dispositif de commande (9) comprenant une puce de commande (92) et au moins une unité d'entrée (93) ; la puce de commande (92) pouvant être connectée, ou étant connectée, électriquement au dispositif de stockage électrique (8), l'unité d'entrée (93) pouvant être connectée, ou étant connectée, électriquement à la puce de commande (92), l'unité d'entrée (93) étant conçue pour commander le mécanisme d'entraînement électrique.

3. Parasol selon la revendication 2, le dispositif de commande (9) comprenant une interface USB (911), laquelle peut être, ou est, connectée électriquement au dispositif de stockage électrique (8) et, en particulier, à la puce de commande (92).

4. Parasol selon au moins l'une des revendications 2 et 3, le dispositif de commande (9) comprenant un dispositif émetteur-récepteur (922) adapté pour recevoir des données Internet et pour fournir des signaux Wi-Fi, lequel dispositif est couplé à la puce de commande (92) pour la transmission de données.

5. Parasol selon au moins l'une des revendications 2-4, le dispositif de commande (9) comprenant un module de détection (921) pour la détection du niveau de charge du dispositif de stockage électrique (8) et un écran d'affichage (912) pour l'affichage du niveau de charge du dispositif de stockage électrique (8) ;
le module de détection (921) pouvant être connecté, ou étant connecté, électriquement au dispositif de stockage électrique (8) et à la puce de commande (92), respectivement, et l'écran d'affichage (912) pouvant être connecté, ou étant connecté, électriquement au module de détection (921).

6. Parasol selon l'une des revendications 1-5, le mécanisme d'entraînement électrique comprenant un moteur (12) et une vis (13), le moteur (12) pouvant être connecté, ou étant connecté, électriquement au dispositif de stockage électrique (8), la vis (13) étant raccordée mécaniquement à un arbre de moteur du moteur (12), et la colonne montante interne (1b) étant raccordée à la vis (13).

7. Parasol selon l'une des revendications 1-5, le mécanisme d'entraînement électrique comprenant un moteur (12), une roue motrice et un câble de traction, le moteur (12) pouvant être connecté, ou étant connecté, électriquement au dispositif de stockage électrique (8), la roue motrice étant montée sur un arbre de moteur du moteur (12), une extrémité du câble de traction étant fixée sur la roue motrice, et la colonne montante interne (1b) étant raccordée, ou pouvant être raccordée, à l'autre extrémité du câble de traction.

8. Parasol selon au moins l'une des revendications précédentes, comprenant une pluralité de buses de pulvérisation (11) ; la pluralité de buses de pulvérisation (11) étant distribuées sur au moins un élément parmi la colonne montante externe (1a), la tête de suspension supérieure (4), la tête de suspension inférieure (7), la glissière (5) et le montant supérieur (2) ; chaque buse de pulvérisation (11) pouvant être, ou étant, connectée électriquement à la puce de commande (92).

9. Parasol selon au moins l'une des revendications précédentes, comprenant une pluralité d'éléments émetteurs de lumière (10), les éléments émetteurs de lumière (10) étant disposés sur un ou plusieurs éléments parmi le montant supérieur (2), le montant médian (6) et le montant inférieur (3) ; et chacun des éléments émetteurs de lumière (10) pouvant être connecté, ou étant connecté, électriquement au dispositif de stockage électrique (8) ;
en particulier, le montant supérieur (2), le montant médian (6) et le montant inférieur (3) étant au moins partiellement des structures tubulaires creuses formant des cavités, et les éléments émetteurs de lumière (10) étant réalisés comme des bandes LED, les éléments émetteurs de lumière (10) étant au moins partiellement disposés dans les cavités du montant supérieur (2), du montant médian (6) et/ou du montant inférieur (3).

10. Parasol selon au moins l'une des revendications précédentes, le tissu de parasol (14) comprenant un tissu de parasol intérieur (14a) et un tissu de toit (14b), le tissu de toit (14b) étant positionné en haut du parasol et couvrant une partie supérieure du tissu de parasol intérieur (14a), et des trous traversants étant fournis entre le tissu de toit (14b) et le tissu de parasol intérieur (14a) ;
le module solaire (15) étant en particulier positionné sur une surface supérieure du tissu de parasol intérieur (14a) et/ou une surface supérieure du tissu de toit (14b).

11. Parasol selon au moins l'une des revendications précédentes, comprenant une table (16) avec un orifice, la table (16) étant adaptée pour être montée sur la colonne montante externe (1a) du parasol en insérant la colonne montante externe (1a) dans l'orifice et en la fixant avec au moins un élément de fixation.

12. Parasol selon au moins l'une des revendications précédentes, comprenant une unité d'entrée (93) adaptée pour l'ouverture et/ou la fermeture manuelles du parasol.

13. Système de parasol, comprenant un parasol selon l'une quelconque des revendications 1-10 ou 12 et une table (16), la table (16) comprenant un orifice qui est adapté pour être monté sur une colonne montante externe (1a) du parasol en insérant la colonne montante externe (1a) dans l'orifice et en la fixant avec au moins un élément de fixation ;
la table (16) comprenant un dispositif de commande (9) avec une puce de commande (92), un dispositif de stockage électrique (8), un dispositif de chargement sans fil, au moins une interface USB (911) et un dispositif d'amélioration Wi-Fi, le dispositif de stockage électrique (8), le dispositif de chargement sans fil, l'interface USB (911) et le dispositif d'amélioration Wi-Fi pouvant être, ou étant, connecté électriquement ou électroniquement, respectivement, à la puce de commande (92) ;
le parasol comprenant au moins un module (15), lequel peut être, ou est, connecté électriquement au dispositif de stockage électrique (8), et le dispositif de stockage électrique (8) étant conçu pour fournir de l'énergie électrique au mécanisme d'entraînement électrique, lequel est connecté mécaniquement au châssis de parasol (1), de telle sorte que le châssis de parasol (1) est conçu pour être ouvert et fermé par le mécanisme d'entraînement électrique ;
le parasol comprenant au moins un élément émetteur de lumière (10), lequel peut être, ou est, connecté électriquement au dispositif de stockage électrique (8), et le dispositif de commande (9) comprenant une unité d'entrée (93) qui est conçue pour commander le mécanisme d'entraînement électrique et l'élément émetteur de lumière (10).
